# FASCICULE DE BREVET EUROPEEN

(11) **EP 0 616 786 B1**
(45) Date de publication et mention de la délivrance du brevet: **14.05.1997**
(21) Numéro de dépôt: 94420103.7
(22) Date de dépôt: 24.03.1994
(51) Int. Cl.: A47J 31/057

(54) **Machine à café à goulotte de recyclage d'eau**
Kaffeemaschine mit Wasserrückführungsschacht
Coffee brewer with water return conduct

(30) Priorité: 24.03.1993 FR 9303635
(43) Date de publication de la demande: 28.09.1994
(73) Titulaire: SEB S.A., 69130 Ecully (FR)
(72) Inventeur: Charles, Patrick, F-65290 Louey (FR); Dulout, Jean-Michel, F-65120 Luz Saint Sauveur (FR)

(56) Documents cités:
- EP-A- 0 287 780
- DE-C- 2 932 053
- GB-A- 290 481
- US-A- 4 464 981

## Description

La présente invention se rapporte au domaine technique général des machines à boissons chaudes, et en particulier à celui des machines à café électrique, dans lesquelles la préparation de la boisson est obtenue par lixiviation d'un liquide chaud, en général de l'eau, dans une mouture aromatique, telle que du café.

La présente invention concerne une machine à café électrique comportant des moyens de chauffe de l'eau, un réservoir, un tube de montée d'eau reliant le réservoir à une chambre de distribution située au-dessus d'un porte-filtre et pourvue d'un orifice de distribution d'eau, une conduite de recyclage d'eau reliant la chambre de distribution au réservoir, et un clapet de commande de l'ouverture ou de la fermeture de l'orifice de distribution permettant en position de fermeture le recyclage de l'eau par la conduite de recyclage.

Les machines à café pourvues d'un système de recyclage de l'eau ont été conçues pour éviter que de l'eau insuffisamment chaude, particulièrement en début de cycle, ne soit amenée en contact avec la mouture et ne produise en conséquence un café à température non optimale. En effet, dans les machines à café ne présentant pas un système de recyclage, il s'avère que la température finale de la boisson contenue dans la verseuse est sensiblement plus faible que dans les machines pourvues d'un tel système. En outre il est reconnu que l'extraction optimale des arômes d'une mouture de café est obtenue lorsque la température de l'eau passant sur la mouture est constante et suffisamment élevée pendant toute la durée du cycle de fonctionnement de la machine à café.

Il a ainsi déjà été décrit dans le brevet DE-C-2932053 une machine à café électrique du type machine à café filtre, comportant un réservoir, des moyens de chauffe de l'eau, et une chambre de distribution située au-dessus du porte-filtre et pourvue d'un clapet de commande de l'ouverture ou de la fermeture d'un orifice de distribution ménagé dans ladite chambre au-dessus du porte-filtre. La machine décrite comprend un système de recyclage de l'eau n'ayant pas atteint la température désirée. Le système de recyclage consiste en une conduite de recyclage reliant la chambre de distribution au réservoir. Le clapet de commande est constitué d'un élément bi-métallique en contact avec l'eau présente dans la chambre de distribution et libérant par déformation l'orifice de distribution lorsque la température de l'eau a atteint une valeur suffisante. En cours de fonctionnement de la machine à café, l'eau arrivant dans la chambre de distribution est recyclée continuellement par la conduite de recyclage dans le réservoir, tant que la température de consigne n'est pas atteinte.

Les machines à café de l'art antérieur conçues sur ce principe permettent dans une certaine mesure d'obtenir un café de température satisfaisante, et on peut considérer que l'extraction des arômes de la mouture s'est également effectuée dans des conditions acceptables. En revanche il s'avère que la durée totale du cycle de fonctionnement, et en particulier celle du temps de pré-chauffage est considérée comme trop longue en raison des déperditions de chaleur survenant au niveau des conduites de recyclage et de montée d'eau. Il a également été constaté en cours de fonctionnement une vaporisation excessive de l'eau dans son trajet de retour du réservoir vers la chaudière produisant des bruits caractéristiques appréciés négativement par l'utilisateur.

Le document GB-A-290 481 décrit une machine à café électrique conforme au préambule de la revendication 1. La machine décrite comporte une goulotte entièrement séparée du réservoir. Avec une telle configuration, le temps de pré-chauffage est particulièrement long.

L'objet de l'invention vise en conséquence à remédier aux inconvénients énumérés précédemment et à proposer une nouvelle machine à café électrique à recyclage d'eau dans laquelle la durée du cycle de pré-chauffage et plus généralement du cycle complet d'obtention de café est réduit, tout en diminuant significativement les phénomènes de vaporisation et en conséquence le niveau sonore de la machine.

Un autre objet de l'invention est de proposer une machine à café électrique dans laquelle la température de l'eau, ainsi que le recyclage de cette dernière dans les moyens de chauffe et de distribution sur la mouture est maitrisée de façon optimale.

Un objet complémentaire de l'invention vise à fournir une machine à café électrique permettant d'obtenir dès le début du cycle de fonctionnement un café de température sensiblement équivalente à la température du café en fin de cycle.

Un autre objet de l'invention vise à proposer une machine à café électrique dans laquelle la commande du recyclage d'eau et de sa distribution est assurée à l'aide d'un élément bi-métallique dont le montage et l'étanchéité sont particulièrement simplifiés.

Les objets assignés à l'invention sont atteints par les caractéristiques de la revendication 1.

D'autres particularités et avantages de l'invention apparaitront et ressortiront plus en détail à la lecture de la description faite ci-après, en référence aux dessins annexés, donnés à titres d'exemples illustratifs et non limitatifs, dans lesquels :
- la figure 1 montre selon une vue en perspective, les principaux éléments d'une machine à café électrique conforme à l'invention et pourvue d'une goulotte de recyclage.
- la figure 2 montre selon une vue en coupe longitudinale partielle un détail de la structure d'une machine à café conforme à l'invention.
- la figure 3 montre selon une vue de dessus des détails de réalisation d'une machine à café conforme à l'invention.
- la figure 4 montre selon une vue en coupe transversale un détail de réalisation de la chambre de distribution d'eau d'une machine à café conforme à l'invention.

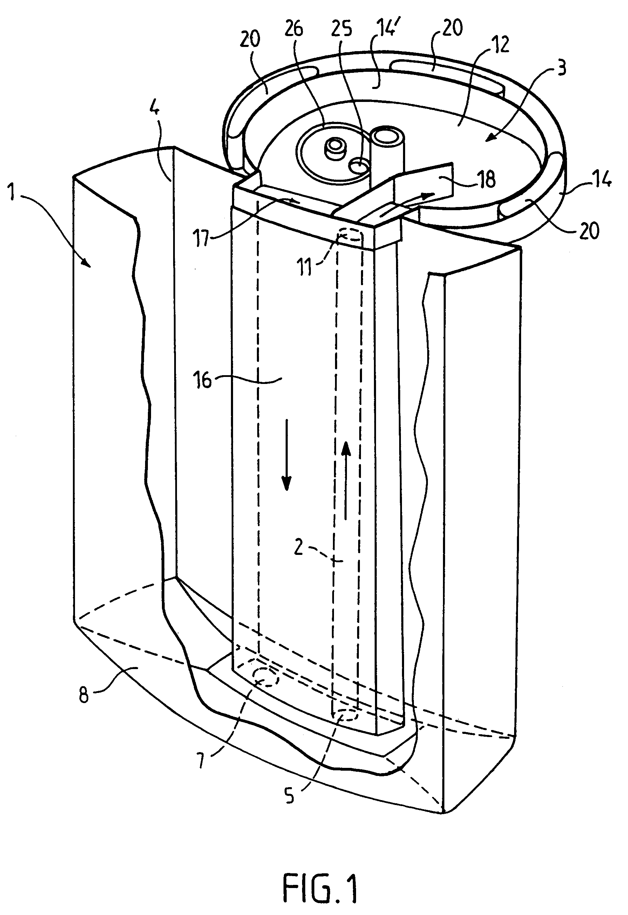

La figure 1 montre les principaux éléments d'une machine à café conforme à l'invention et comportant un réservoir 1 monté en partie arrière de la machine et destiné à assurer le stockage de l'eau nécessaire à l'obtention d'un café.

La machine à café comporte également un tube 2 de montée d'eau reliant le réservoir 1 à une chambre de distribution 3 située à la partie supérieure 4 du réservoir 1 et s'étendant en porte-à-faux à partir de ce dernier au-dessus d'un porte-filtre (non montré aux figures). Ce dernier est de manière classique disposé au-dessus d'une verseuse (non représentée aux figures), reposant sur une plaque de chauffe sous laquelle sont montés des moyens de chauffe (non représentés aux figures) connus en soi, et constitués par exemple d'une résistance blindée en fer à cheval. La résistance blindée est en relation thermique avec un tube de chauffe relié par une extrémité à l'entrée 5 du tube 2 et par l'autre extrémité à un trou d'évacuation 7. Ce dernier est ménagé dans le fond 8 du réservoir 1, et sert à évacuer l'eau du réservoir 1 vers les moyens de chauffe.

La chambre de distribution 3, par exemple de forme sensiblement cylindrique, est limitée par une paroi inférieure 12 et extérieurement par une paroi 14, et est surmontée d'une paroi supérieure 15 formant le couvercle.
(Figure 2).

Le tube 2 de montée d'eau, avantageusement rectiligne et de section circulaire s'étend sensiblement verticalement et, présente en partie haute une sortie d'eau 11 située sensiblement au niveau de la paroi inférieure 12 de la chambre de distribution 3. Il s'étend dans le réservoir 1 à partir de la chambre de distribution 3 sensiblement sur toute la hauteur du réservoir 1. Avantageusement le tube 2 est branché directement par son entrée 5 avec la sortie du tube de chauffe associé à la résistance blindée et relie ainsi indirectement le réservoir 1 à la chambre de distribution 3 par l'intermédiaire des moyens de chauffe.

La machine à café décrite conforme à l'invention comporte une conduite de recyclage d'eau, constituée d'une goulotte 16, de préférence rectiligne, s'étendant au moins en partie dans le réservoir 1, et de préférence verticalement à partir de la chambre de distribution 3 sensiblement jusqu'au fond 8 dudit réservoir pour s'arrêter au voisinage dudit fond, et par exemple à une distance de l'ordre de quelques millimètres. La goulotte 16 est de section par exemple sensiblement rectangulaire, et dans tous les cas présente une section supérieure à celle du tube 2. La goulotte 16 est montée dans le réservoir 1 et par exemple à distance des parois du réservoir, et de telle manière que le tube 2 de montée d'eau s'étende à l'intérieur de la goulotte 16 sur toute sa hauteur pour que cette dernière constitue un chemisage du tube 2.
La goulotte 16 est fixée au niveau de sa partie supérieure 17, formant orifice de déversement, par tous moyens appropriés contre la chambre de distribution 3, et en liaison avec cette dernière par un canal de distribution 18 solidaire de ladite chambre de façon que le niveau de la paroi inférieure 12 soit sensiblement situé sur le même plan que l'orifice de déversement 17.

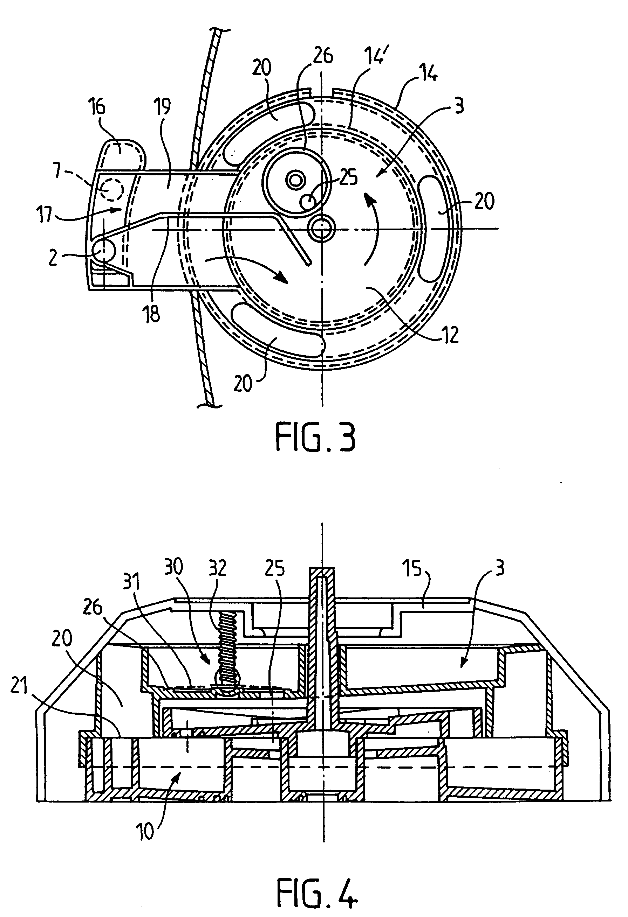

Le trou d'évacuation 7 et la goulotte 16 sont disposés relativement de manière que le trou d'évacuation 7 se trouve au droit de la goulotte 16. Avantageusement, il est prévu de monter une cloison de séparation 18 telle que montrée aux figures 1 et 3 en partie haute de la goulotte 16 afin de canaliser l'eau provenant du tube 2 dans la chambre de répartition 3. La cloison de séparation 18 s'étend dans le canal de distribution 19 joignant l'orifice de déversement 17 jusque dans la chambre de distribution 3. La cloison de séparation 18 sépare ainsi le canal de distribution 19 en deux sections permettant au flux d'eau provenant du tube 2 de montée d'eau de ne pas interférer avec le flux d'eau de recyclage retombant à partir de la chambre de distribution 3 dans la goulotte 16 par l'orifice de déversement 17.

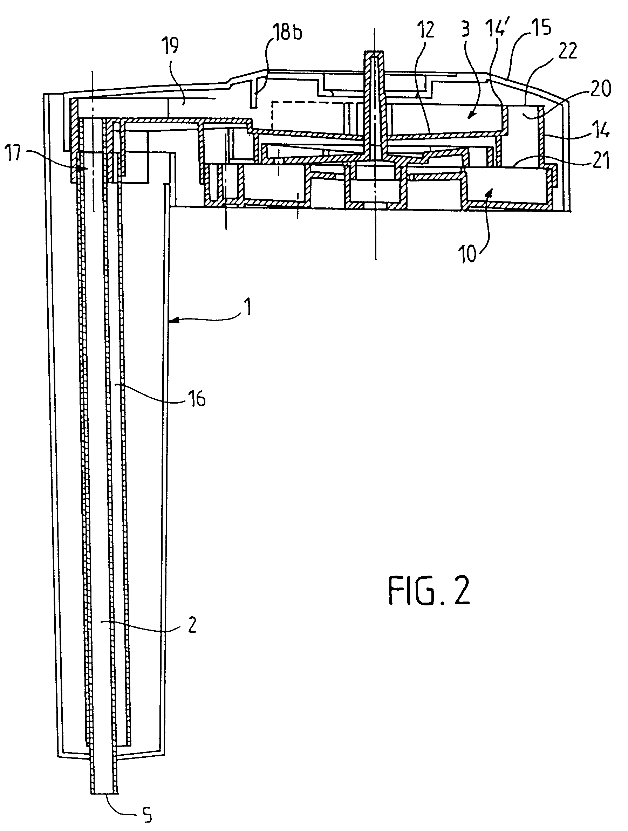

La chambre de distribution 3 comporte de préférence une cloison interne 14' définissant avec la cloison externe 14 une zone annulaire 18 à l'intérieur de laquelle sont ménagées au moins une et de préférence trois cheminées de préchauffage 20. Tel que cela est montré aux figures 2 et 4, chaque cheminée de pré-chauffage 20 communique par une sortie de vapeur 21 avec un dispositif de répartition d'eau 10 située sous la chambre de distribution 3. Chaque cheminée de préchauffage 20 définit dans sa partie supérieure une entrée de vapeur 22 s'étendant à proximité de la paroi supérieure 15. Les cheminées de pré-chauffage 20 permettent à la vapeur créée par l'eau chaude arrivant dans la chambre de distribution 3 de s'évacuer en aval de ladite chambre, préférentiellement dans le dispositif de répartition d'eau 10 afin d'assurer son pré-chauffage.

De manière avantageuse il est également possible en vue d'améliorer le pré-chauffage de prévoir à proximité de l'orifice de déversement 17 une cloison de récupération 18b de vapeur (Figure 2). Une telle cloison s'étendant à distance de la paroi inférieure 12 pour laisser passer l'eau dans la goulotte 16, évite à une partie des vapeurs de s'échapper hors de la chambre de distribution 3 pour être dirigées prioritairement vers les cheminées de pré-chauffage 20.

La chambre de distribution 3 comporte dans sa paroi inférieure 12 un orifice 25 de distribution d'eau de préférence circulaire et destiné à assurer le passage de l'eau vers le porte-filtre. L'orifice 25 est entourée à distance d'une lèvre d'étanchéité 26 surmoulée dans la paroi inférieure 12, circulaire, et formant surépaisseur par rapport à ladite paroi. Le passage de l'eau à travers l'orifice de distribution 25 est commandé par l'intermédiaire d'un clapet de commande 30 constitué d'une coupelle bi-métallique 31 montée élastiquement mobile en appui étanche sur la lèvre d'étanchéité 26. La coupelle bi-métallique 31 repose en appui étanche par sa périphérie sur la lèvre d'étanchéité 26, et est maintenue en appui élastique par l'intermédiaire d'un ressort de compression 32 interposé entre la coupelle 31 et la paroi supérieure 15 et entourant un axe support solidaire de ladite coupelle. Le matériau de la coupelle 31 est bien évidemment choisi de manière à subir une déformation suffisante à une température de consigne permettant le dégagement de l'orifice d'évacuation 25 puis en conséquence le passage de l'eau.

Le fonctionnement du dispositif conforme à l'invention est le suivant.

L'eau chauffée par les moyens de chauffe est propulsée en début de cycle dans le tube de montée d'eau 2, puis dans la chambre de distribution 3 par la sortie d'eau 11. Tant que l'eau n'est pas à une température suffisante correspondant à la température de déformation de la coupelle bi-métallique 31 l'eau est recyclée par l'intermédiaire de la goulotte 16 et de son orifice de déversement 17, dans le réservoir 1. Au cours du cycle de fonctionnement la température de l'eau augmente progressivement et atteint la température initiant la déformation de la coupelle bi-métallique 31 et permettant alors par dégagement de l'orifice 25 le passage de l'eau dans le dispositif de répartition d'eau 10, puis dans la mouture. La présence dans la goulotte de recyclage 16 d'une eau dont la température augmente progressivement permet de créer autour du tube 2 de remontée d'eau un matelas d'eau proportionnellement plus chaud que la température moyenne de l'eau contenue dans le réservoir 1. Ainsi il a pu être constaté que pour une valeur de déclenchement de la coupelle 31 de l'ordre de 90°C la température de l'eau autour du tube 2 de montée d'eau montait jusqu'à une température de l'ordre de 80° C juste avant le changement d'état de la coupelle bi-métallique 31, alors que l'eau se trouvant dans le réservoir 1 était à une température de l'ordre de 40°C. Cette particularité a pour conséquence de réduire les pertes thermiques autour du tube de montée d'eau 2 et de diminuer en conséquence fortement la durée du cycle d'obtention d'un café. Par ailleurs l'eau évacuée prioritairement par le trou d'évacuation 7 provient en majorité de l'eau contenue dans la goulotte 16, laquelle est à une température relative supérieure à la température moyenne de l'eau du réservoir 1. Ceci a pour conséquence d'évacuer en priorité vers les moyens de chauffe une eau de température relativement plus élevée permettant d'éviter ou de réduire fortement tout risque de vaporisation d'eau. Ce phénomène est particulièrement sensible dès que les moyens de chauffe ont atteint leur température moyenne de fonctionnement, et contribue fortement à réduire le niveau sonore de la machine à café conforme à l'invention. La réduction du niveau de bruit est particulièrement sensible en fin de cycle lorsqu'il reste peu d'eau dans le réservoir 1.

## Revendications

1. Machine à café électrique comportant des moyens de chauffe de l'eau, un réservoir (1), un tube (2) de montée d'eau reliant indirectement le réservoir (1) à une chambre de distribution (3) pourvue d'un orifice (25) de distribution d'eau, une conduite de recyclage d'eau reliant la chambre de distribution (3) au réservoir (1), et un clapet de commande (30) de l'ouverture ou de la fermeture de l'orifice de distribution (25) permettant en position de fermeture le recyclage de l'eau par la conduite de recyclage, la conduite de recyclage étant constituée d'une goulotte (16) à l'intérieur de laquelle s'étend le tube (2) de montée d'eau, caractérisée en ce que la goulotte (16) s'étend au moins en partie dans le réservoir (1).

2. Machine selon la revendication 1 caractérisée en ce que la chambre de distribution (3) est située au-dessus d'un porte-filtre.

3. Machine selon la revendication 1 caractérisée en ce que la goulotte (16) s'étend à partir de la chambre de distribution (3) sensiblement jusqu'au fond (8) du réservoir (1) pour s'arrêter au voisinage dudit fond.

4. Machine selon l'une des revendications 1 à 3 caractérisée en ce que le tube (2) de montée d'eau s'étend à partir de la chambre de distribution (3) sensiblement sur toute la hauteur de la goulotte (16).

5. Machine selon l'une des revendications 1 à 4 caractérisée en ce que le réservoir (1) comporte un trou d'évacuation (7) de l'eau ménagé dans son fond (18), au droit de la goulotte (16).

6. Machine selon l'une des revendications 1 à 5 caractérisée en ce que la chambre de distribution (3) comporte au moins une cheminée de pré-chauffage (20) pour le passage de la vapeur en aval de ladite chambre.

7. Machine selon la revendication 6 caractérisée en ce que la chambre de distribution (3) comporte trois cheminées de pré-chauffage (20) disposées à la périphérie de ladite chambre et possédant une entrée de vapeur (22) à proximité de la paroi supérieure (15) de ladite chambre (3) et une sortie de vapeur (21).

8. Machine selon l'une des revendications 1 à 7 caractérisée en ce que la chambre de distribution (3) comporte à proximité de l'orifice de déversement (17) de la goulotte (16), une cloison de récupération (18b) de vapeur.

9. Machine selon l'une des revendications 1 à 8 caractérisée en ce que le clapet de commande (30) est une coupelle bimétallique (31) montée élastiquement mobile en appui étanche sur l'orifice de distribution (25) pour assurer son dégagement ou sa fermeture.

10. Machine selon la revendication 9 caractérisée en ce que la coupelle bimétallique (31) est montée en appui étanche par sa périphérie sur une lèvre d'étanchéité (26) entourant l'orifice de distribution (25).

## Claims

1. An electrical coffee maker comprising water heater means, a tank (1), a water-raising tube (2) indirectly connecting the tank (1) to a dispenser chamber (3) provided with a water dispenser orifice (25), a water recycling duct connecting the dispenser chamber (3) to the tank (1), and a control valve (30) for opening or closing the dispenser orifice (25) serving, in the closed position, to enable water to be recycled via the recycling duct, the recycling duct being constituted by a chute (16) within which the water-raising tube (2) extends, the coffee maker being characterized in that the chute (16) extends at least in part within the tank (1).

2. A coffee maker according to claim 1, characterized in that the dispenser chamber (3) is situated above a filter carrier.

3. A coffee maker according to claim 1, characterized in that the chute (16) extends from the dispenser chamber (3) substantially to the bottom (8) of the tank (1) and comes to an end in the vicinity of said bottom.

4. A coffee maker according to any one of claims 1 to 3, characterized in that the water-raising tube (2) extends from the dispenser chamber (3) over substantially the full height of the chute (16).

5. A coffee maker according to any one of claims 1 to 4, characterized in that the tank (1) includes a water outlet hole (7) formed through its bottom (18) within the chute (16).

6. A coffee maker according to any one of claims 1 to 5, characterized in that the dispenser chamber (3) includes at least one preheating chimney (20) for passing vapor downstream from said chamber.

7. A coffee maker according to claim 6, characterized in that the dispenser chamber (3) includes three preheating chimneys (20) disposed at the periphery of said chamber and each possessing a vapor inlet (22) close to the top wall (15) of said chamber (3) and a vapor outlet (21).

8. A coffee maker according to any one of claims 1 to 7, characterized in that the dispenser chamber (3) includes a vapor recovery partition (18b) in the vicinity of the overflow orifice (17) of the chute (16).

9. A coffee maker according to any one of claims 1 to 8, characterized in that the control valve (30) is a bimetallic cup (31) mounted to move resiliently in sealed compression against the dispenser orifice (25) for the purpose of releasing it or closing it.

10. A coffee maker according to claim 9, characterized in that the bimetallic cup (31) is mounted to bear in sealed manner via its periphery against a sealing lip (26) surrounding the dispenser orifice (25).

## Patentansprüche

1. Elektrische Kaffeemaschine mit Mitteln zum Heizen von Wasser, einem Vorratsbehälter (1), einem Wassersteigrohr (2), welches den Vorratsbehälter (1) indirekt mit einer Verteilkammer (3) verbindet, die mit einer Wasserverteilöffnung (25) versehen ist, einer Wasserrückführleitung, welche die Verteilkammer (3) mit dem Vorratsbehälter (1) verbindet, und einem Steuerventil (30) zum Öffnen oder zum Schließen der Verteilöffnung (25), das in der Stellung des Schließens das Rückfüren von Wasser über die Rückführleitung ermöglicht, wobei die Rückführleitung durch einen Ablaufkanal (16) gebildet ist, in dessen Inneren sich das Wassersteigrohr (2) befindet, dadurch gekennzeichnet, daß sich der Ablaufkanal (16) wenigstens teilweise in dem Vorratsbehälter (1) erstreckt.

2. Maschine nach Anspruch 1, dadurch gekennzeichnet, daß die Verteilkammer (3) oberhalb eines Filterträgers angeordnet ist.

3. Maschine nach Anspruch 1, dadurch gekennzeichnet, daß sich der Ablaufkanal (16) ausgehend von der Verteilkammer (3) im wesentlichen bis zum Boden (8) des Vorratsbehälters (1) erstreckt und in der Nähe von dessen Boden endet.

4. Maschine nach einem der Ansprüche 1 bis 3, dadurch gekennzeichnet, daß sich das Wassersteigrohr (2) ausgehend von der Verteilkammer (3) im wesentlichen Ober die gesamte Höhe des Ablaufkanals (16) erstreckt.

5. Maschine nach einem der Ansprüche 1 bis 4, dadurch gekennzeichnet, daß der Vorratsbehälter (1) ein Wasserabflußloch (7) aufweist, das in seinem Boden (18) in der Verlängerung des Ablaufkanals (16) gebildet ist.

6. Maschine nach einem der Ansprüche 1 bis 5, dadurch gekennzeichnet, daß die Verteilkammer (3) wenigstens einen Vorheizweg (20) für den Durchgang von Dampf aus der Kammer heraus aufweist.

7. Maschine nach Anspruch 6, dadurch gekennzeichnet, daß die Verteilkammer (3) drei Vorheizwege (20) aufweist, die am Umfang der Kammer angeordnet sind und einen Dampfeingang (22) in der Nähe der oberen Wand (15) der Kammer (3) und einen Dampfausgang (21) aufweisen.

8. Maschine nach einem der Ansprüche 1 bis 7, dadurch gekennzeichnet, daß die Verteilkammer (3) in der Nähe der Einlauföffnung (17) des Ablaufkanals (16) eine Dampf-Rückhaltewand (18b) aufweist.

9. Maschine nach einem der Ansprüche 1 bis 8, dadurch gekennzeichnet, daß das Steuerventil (30) eine Bimetallscheibe (31) ist, die elastisch bewegbar in dichter Anlage an der Verteilöffnung (25) angebracht ist, um ihr Öffnen oder ihr Verschließen zu gewährleisten.

10. Maschine nach Anspruch 9, dadurch gekennzeichnet, daß die Bimetallscheibe (31) mittels ihres Umfangs in dichter Anlage an einer Dichtlippe (26) angebracht ist, welche die Verteilöffnung (25) umgibt.
